# EUROPÄISCHE PATENTSCHRIFT

(11) **EP 1 406 051 B1**
(45) Veröffentlichungstag und Bekanntmachung des Hinweises auf die Patenterteilung: **19.05.2004**
(21) Anmeldenummer: 02024001.6
(22) Anmeldetag: 26.10.2002
(51) Int. Cl.: F25D 13/04

(54) **Palettenlageranlage**
Pallet storage plant
Installation de stockage des palettes

(30) Priorität: 23.09.2002 DE 10244289
(43) Veröffentlichungstag der Anmeldung: 07.04.2004
(73) Patentinhaber: Becker Marine Systems GmbH & Co. KG, 20179 Hamburg (DE)
(72) Erfinder: Lehmann, Dirk,Dipl.-Ing., 21423 Winsen (DE)
(74) Vertreter: Richter, Werdermann, Gerbaulet & Hofmann

(56) Entgegenhaltungen:
- EP-A- 0 780 643
- EP-A- 1 179 491
- DE-A- 10 011 205
- US-A- 4 678 390
- US-A- 5 379 229
- LIMMER G: "INVERTED ATMOSPHERIC CONDITIONS - GOOD NEWS FOR DOUBLE-ZONE WAREHOUSES" ENGINEERING AND AUTOMATION, SIEMENS AKTIENGESELLSCHAFT, BERLIN, DE, Bd. 18, Nr. 6, 1. November 1996 (1996-11-01), Seiten 12-14, XP000643523 ISSN: 0939-2068

## Beschreibung

Die Erfindung betrifft eine Palettenlageranlage zur Lagerhaltung von Lagergütem unter verschiedenen klimatischen Bedingungen, insbesondere für den Einsatz in einem Wasserfahrzeug gemäß dem Oberbegriff des Anspruchs 1.

Bei der Lagerhaltung unterschiedliche Lagergüter besteht generell das Problem, dass für die optimale Lagerung verschiedener Lagergüter, wie etwa Nahrungs- und Genussmitteln, verschiedene klimatische Bedingungen notwendig sind. So werden etwa Konserven bei einer höheren Temperatur gelagert als Fisch, Fleisch oder andere leicht verderbliche Lebensmittel. Das Problem tritt verschärft in Schiffen auf, wo Proviant und andere Lagergüter in Paletten, Kisten, Wechselbehältern und dergleichen auf geringstem Raum gelagert werden müssen.

Eine Lageranlage mit den Merkmalen des Oberbegriffes des Anspruchs 1 ist durch die US 5,379,229 A bekannt, die ein automatisiertes Beförderungssystem für Lager offenbart, in denen verschiedene Gegenstände eingelagert und ausgelagert werden können. Dieses System umfasst mehrere Lagerregalanordnungen. Jede Lagerregalanordnung verfügt über mehrere Fächer, die für die Lagerung von Gegenständen dimensioniert sind. Ein Lagerungstransporter kann jeweils an jeder Lagerregalanordnung entlang bewegt werden, um neben einen beliebigen Schlitz positioniert zu werden. Mehrere horizontale Bahnen sind senkrecht zu den Lagerregalanordnungen angeordnet. Jede Lagerregalanordnung hat ein Ende neben den Bahnen. Ein Läufertransporter ist an jede Bahn gekoppelt und auf ihr beweglich, um eins der Gegenstände von einem Lagerungstransporter zu empfangen oder ihm eins der Gegenstände zu bringen. Zwei Übergaberegalanordnungen sind an entgegengesetzten Enden der Bahnen senkrecht zur Bahn angeordnet. Es gibt Übergabetransporter neben den Übergaberegalanordnungen zur Bewegung von Gegenständen zwischen der Übergaberegalanordnung und den Läufertransportern. Anforderungen von Lagerungs- und Zurückholvorgängen werden durch gleichzeitige Übergabe von Positionierungssignalen an einen Übergabetransporter, einen Läufertransporter und einen Lagerungstransporter erzeugt. Lagerungstransporter werden nach einer vorher festgelegten Transporterauswahlfunktion ausgewählt. Lagerungsfächer werden nach einer vorher festgelegten Transportauswahlfunktion ausgewählt. Eine Datenbank speichert die Kategorie, das Alter und den Ort jedes der Gegenstände. Mit diesem System erfolgt die Lagerhaltung der Waren ohne Berücksichtigung der jeweils gegebenen und sich auch oftmals ändernden klimatischen Verhältnisse, die für die Lagerhaltung bei Aufrechterhaltung der Warengüter auch über einen längeren Zeitraum hinaus maßgeblich sind.

Der Erfindung liegt daher die Aufgabe zugrunde, eine Palettenlageranlage der eingangs genannten Art zu schaffen, mit der Lagergüter automatisch kompakt und in Abhängigkeit von ihrer Lagerfähigkeit unter Aufrechterhaltung der klimatischen Bedingungen, unter denen die Güter auch über längere Zeit haltbar lagerbar sind, gestaut werden können. Die Lagergüter sollen dem Lager auch in einfacher Weise zugeführt und entnommen werden können.

Diese Aufgabe wird durch eine Palettenanlage mit den im Anspruch 1 angegebenen Merkmalen gelöst.

Hiernach besteht die Erfindung darin, dass beiderseits des Lagerganges Lagerreihen angeordnet sind, die mehrere durch Trennwände getrennte Lagerräume bilden, in denen unterschiedliche klimatische Bedingungen einstellbar sind, wobei die klimatisierten Lagerräume jeweils eine mit der Steuer- und Überwachungseinheit zusammenwirkende Messeinrichtung aufweisen, die die Temperatur und/oder die Gaszusammensetzung der Atmosphäre erfasst, dass zumindest ein Teil der getrennten Lagerräume jeweils eine Klimatisierungseinrichtung aufweist, die eine vorbestimmte Temperatur und/oder eine vorbestimmte Atmosphäre, insbesondere mit vorbestimmtem Sauerstoff-, Kohlendioxid- oder Schutzgasgehalt, in dem Lagerraum einstellt und dass die Steuer- und Überwachungseinheit die Menge der im Kommissionierungsbereich zugeführten oder entnommenen Lagergüter überwacht und die Einlagerung von Lagergütern in einen Lagerraum (10A-10K) mit dem jeweiligen Lagergut angepassten klimatischen Bedingungen steuert.

Mit einer derart ausgebildeten Palettenlageranlage ist ein automatisches, klimatisiertes Stausystem für Proviant und Munition, insbesondere für Schiffe, geschaffen.

Durch die unterschiedlichen klimatischen Bedingungen in den getrennten Lagerräumen können eine Vielzahl verschiedenartiger Lagergüter, wie Fisch, Fleisch, Geflügel, Gemüse, Milchprodukte, Getränke, aber auch Tischdecken, Jacken und dergleichen unter jeweils geeigneten Bedingungen gelagert werden. Des weiteren ist die Palettenlageranlage für die Lagerung von Munition und anderweitiger Sprengkörper in den Laderäumen von Transportschiffen, Flugzeugträgern und Kriegsschiffen geeignet. Die Steuer- und Überwachungseinheit ermittelt für ein zugeführtes Lagergut einen Lagerraum mit dem jeweiligen Lagergut angepassten klimatischen Bedingungen. Mittels des Längstransportwagens kann dann eine Palette mit dem Lagergut zu einer geeigneten Lagerreihe gebracht und mit dem Quertransportwagen in die Lagerreihe eingelagert werden. Durch ein Hintereinanderlagem der Paletten in den Lagerreihen wird eine kompakte Verstauung der Lagergüter erreicht. Die Überwachung der Menge der zugeführten oder entnommenen Lagergüter und die Steuerung der Einlagerung durch die Steuer- und Überwachungseinheit stellt sicher, dass stets bekannt ist, welche Lagergüter im Palettenlager vorhanden sind, und wo sie eingelagert sind. Des weiteren wird der Vorteil erreicht, dass die Lagergüter je nach ihren Anforderungen an Temperatur und/oder Atmosphäre in einem geeigneten Lagerraum untergebracht werden können. Beispielsweise kann durch die Verwendung eines inerten Gases die Haltbarkeit von Früchten oder von Gemüse wesentlich erhöht werden. Auch kann durch eine kontrollierte Atmosphäre der Brandgefahr wirkungsvoll begegnet werden.

Durch die Maßnahme der Erfassung von Temperatur und/oder Gaszusammensetzung in den klimatisierten Lagerräumen kann die Steuer- und Überwachungseinheit alle wesentlichen Regelungsfunktionen für die einzelnen Lagerräume übernehmen.

Vorteilhafte Ausgestaltungen und Weiterbildungen der Erfindung sind in den Unteransprüchen gekennzeichnet.

Die Sicherung der klimatisierten Lagerräume gemäß Anspruch 2 bietet den Vorteil, dass die Atmosphäre aus einem Lagerraum nur in die atmosphärische Schleuse gelangt und nicht in den Lagergang oder in Lagerräume, die andere klimatische Bedingungen aufweisen.

Gemäß Patentanspruch 3 wird durch die Führung des Längstransportwagens in an einer Raumdecke des Lagers angebrachten Schienen eine einfache und robuste Trag- und Laufführung der Transporteinrichtung bereit gestellt.

Nach der Maßnahme des Anspruchs 4 ist der Quertransportwagen auf den Längstransportwagen aufgesattelt und mittels entlang der Lagerreihen angebrachten Führungsschienen in die einzelnen Lagerreihen verfahrbar. Somit sind alle Lagerplätze durch eine Kombination von Verfahrstrecken des Längs- und Quertransportwagen zugänglich.

Durch die Maßnahme des Anspruchs 5, die Trennwände der Lagerräume aus Edelstahl oder aus mit aluminiumbeschichteten Paneelen auszubilden, wird eine stabile physikalische Trennung der Lagerräume und eine Sicherung der eingelagerten Güter erreicht.

Besonders vorteilhaft ist eine Gestaltung gemäß Anspruch 6, nach der die Trennwände die Lagerräume wasserdicht, feuerfest und gasdicht von einander abtrennen.

Gemäß Anspruch 7 ist zumindest ein Lagerraum mit doppelwandigen und mit Wasser befüllbaren Trennwänden, bevorzugt zusätzlich mit einer doppelwandigen, mit Wasser befüllbaren Deckenverkleidung versehen. Dies gestattet die Lagerung von Munition oder anderen Explosivstoffen, da die doppelwandigen, mit Wasser gefüllten Trennwände notfalls die Detonationsenergie aufnehmen können.

Durch die in Patentanspruch 8 angegebene Maßnahme, nach der die Steuer- und Überwachungseinheit die Zugriffshäufigkeit der Lagergüter erfasst und die Lagergüter mit einem ihrer Zugriffshäufigkeit entsprechenden Transportweg zum Kommissionierungsbereich einlagert, wird ein optimierter Zugriff auf die Lagergüter sichergestellt.

Mit der Maßnahme des Patentanspruchs 9, nach der die Steuer- und Überwachungseinheit Haltbarkeitsdaten von Lagergütern erfasst und vor oder bei Erreichen des Verfallsdatums eine Warnanzeige für diese Lagergüter erzeugt, wird in einfacher Weise eine Haltbarkeitsüberwachung in die Anlage integriert.

Gemäß Patentanspruch 10 ist vorgesehen, dass die Steuer- und Überwachungseinheit die gelagerte Menge von Lagergütern überwacht und bei Unterschreiten einer vorbestimmten Mindestmenge eine Warnanzeige für diese Lagergüter erzeugt. Der Lagerverwalter kann dann rechtzeitig neue Lagergüter anfordern.

Ausführungsbeispiele der Erfindung werden nachstehend anhand der Zeichnungen näher erläutert. Es zeigen
- Fig. 1: eine perspektivische Ansicht einer Palettenlageranlage nach einem Ausführungsbeispiel der Erfindung;
- Fig. 2: eine Aufsicht auf einen Teil einer Palettenlageranlage nach einem Ausführungsbeispiel der Erfindung;
- Fig. 3: eine Vorderansicht der Palettenlageranlage der Fig. 2, gesehen aus der Richtung III-III;
- Fig. 4: eine Seitenansicht der Palettenlageranlage der Fig. 2, gesehen aus der Richtung IV-IV mit ausgefahrenem Quertransportwagen; und
- Fig. 5: in (a) bis (c) verschiedene Varianten der Einlagerung von Lagergütern auf Palette.

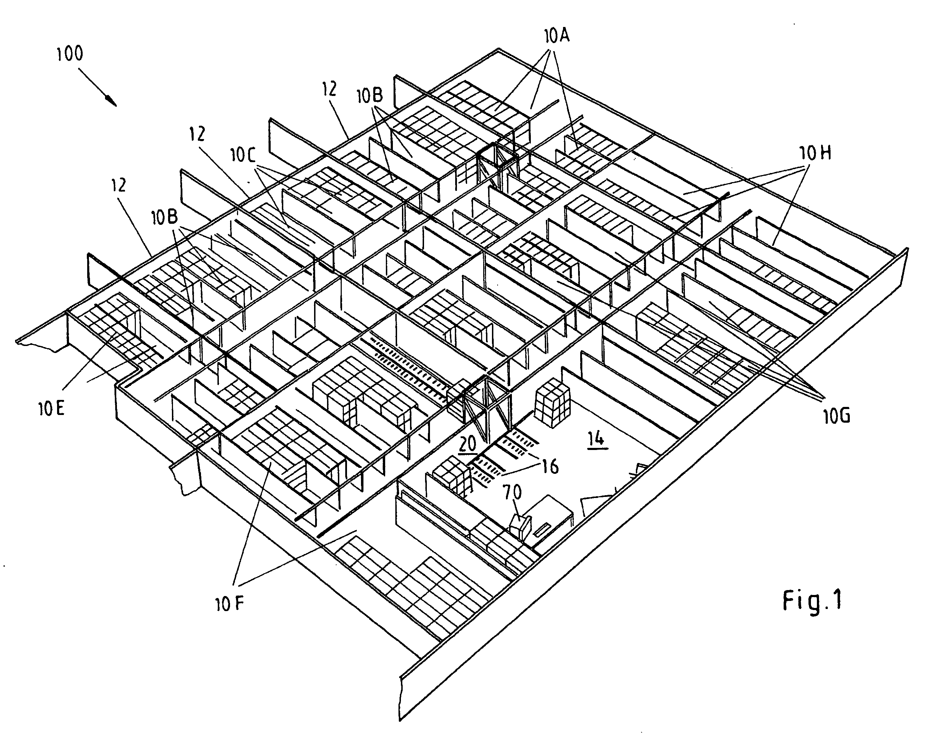

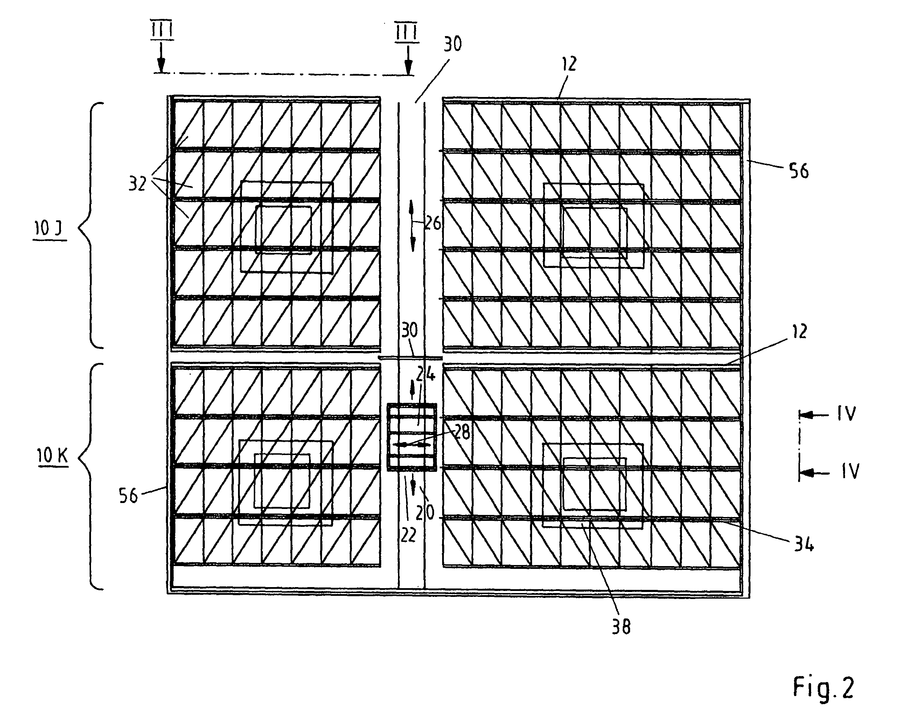

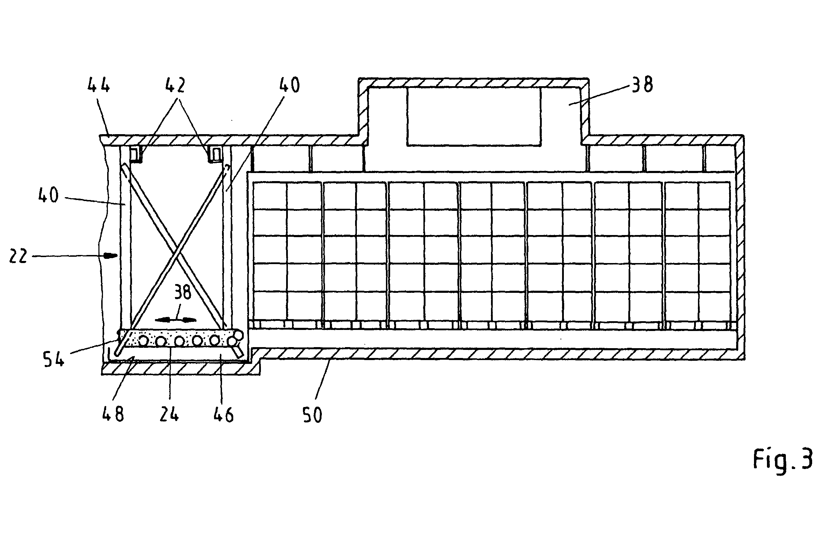

In der Figur 1 ist eine perspektivische Ansicht einer in einem Schiff eingebauten Palettenlageranlage 100 nach einem Ausführungsbeispiel der Erfindung dargestellt. Die Palettenlageranlage 100 enthält eine Mehrzahl von Lagerräumen 10A bis 10H, die voneinander durch Trennwände 12 abgetrennt sind. Die Lagerräume 10A-10H dienen der Lagerung unterschiedlicher Lagergüter. Zumindest einige der Lagerräume 10A-10H weisen daher unterhalb der in Fig. 1 nicht dargestellten Raumdecke Klimatisierungseinrichtungen 38 (Figuren 2 und 3) auf, die eine vorbestimmte Temperatur und/oder eine vorbestimmte Atmosphäre in dem jeweiligen Lagerraum einstellen.

Beispielsweise können die Lagerräume 10A und 10B bei einer Temperatur von -25 °C der Lagerung von Fisch bzw. Fleisch dienen, der Raum 10C bei einer Temperatur von -20 °C der Lagerung von Geflügel und Gemüse, der Raum 10D bei einer Temperatur von +4 °C der Lagerung von Milchprodukten und die Räume 10G und 10H bei einer Temperatur von +10 °C der Lagerung von Getränken, wie Mineralwasser, Limonaden, Bier oder hochprozentigen alkoholischen Getränken. Im Raum 10E ist im Ausführungsbeispiel durch eine kontrollierte Inertgas-Atmosphäre ohne Sauerstoff ein Lagerbereich für feuer- oder korrosionsgefährdete Lagergüter geschaffen, der Raum 10F ist als Trockenfrachtraum vorgesehen.

Die Palettenlageranlage 100 weist weiter eine Kommissionierungszone 14 mit mehreren Kommissionierungsplätzen auf. Diese Kommissionierungszone ist mit einer nachfolgend genauer beschriebenen Transporteinrichtung 20 erreichbar, die im Ausführungsbeispiel in verschiedene Zugangsbereiche 16 zum Zuführen oder Entnehmen von Lagergütern einfahrbar ist.

Der Ausschnitt der Fig. 2 zeigt den Grundaufbau einer erfindungsgemäßen Palettenlageranlage in Aufsicht. Dargestellt sind zwei Lagerräume 10J und 10K, die durch eine Trennwand 12 voneinander getrennt sind. Jeder Lagerraum 10J, 10K weist mehrere, durch Wände 34 voneinander getrennte Lagerreihen 32 auf, die in ihrer Breite jeweils eine Palette aufnehmen und die jeweils von einer rückwärtigen Wand 56 her befüllt werden.

In einem die Lagerräume durchziehenden Lagergang 30 ist eine fahrbare Transporteinrichtung 20 angebracht, die einen Längstransportwagen 22 und einen auf diesem angeordneten Quertransportwagen 24 aufweist. Der Längstransportwagen 22 ist, wie durch die Pfeile 26 angezeigt, entlang des Lagergangs 30 verfahrbar, und der Quertransportwagen 24 ist vom Längstransportwagen 22 aus in Richtung der Pfeile 28 in die einzelnen Lagerreihen 32 verfahrbar.

Wie weiter unten genauer erläutert, ist zur atmosphärischen Trennung der unterschiedlich klimatisierten Lagerräume 10J und 10K im Bereich des Lagergangs 30 ein Trennschott 36 vorgesehen. Die Trennwände 12 bzw. die Wände 34 zwischen den Lagerreihen 32 bestehen im Ausführungsbeispiel aus aluminiumbeschichteten Paneelen, und sind zur Sicherung der Ladung in Schiffsquerrichtung angeordnet.

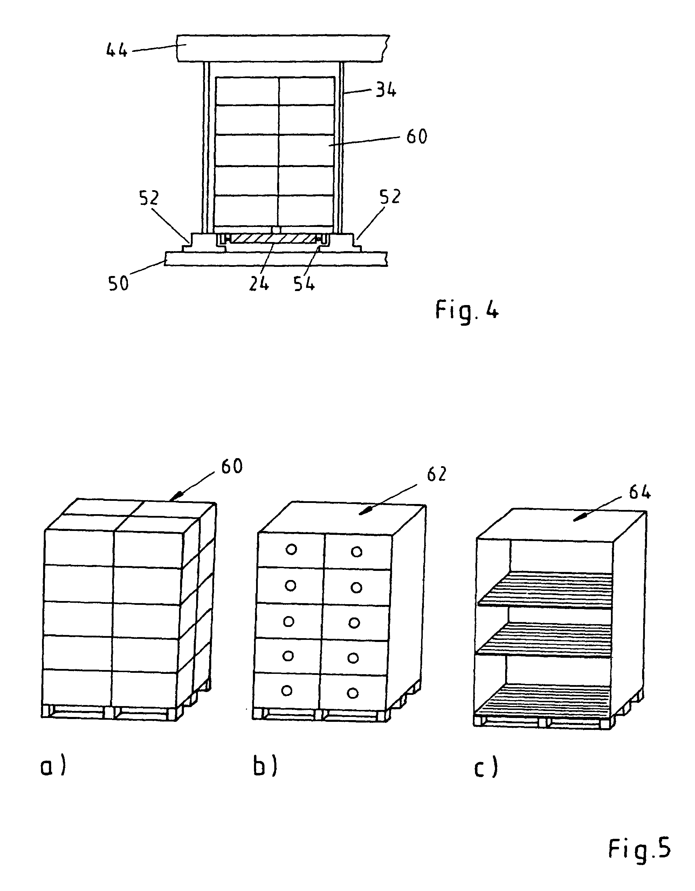

Die Funktionsweise der Transporteinrichtung 20 wird nun mit Bezugnahme auf die Figuren 3 und 4 näher erläutert. Figur 3 zeigt eine Vorderansicht der Palettenlageranlage der Fig. 2, gesehen aus der Richtung III-III. Der Längstransportwagen 22 ist vermittels Halterungen 40 im oberen Bereich in Schienen 42 geführt, die an der Raumdecke 44 des Lagerraums angebracht sind. Eine Transportplattform 46 des Längstransportwagens 22 liegt in einer Vertiefung 48 des Raumbodens 50, so dass der aufgesattelte Quertransportwagen 24 von der Transportplattform 46 mittels Führungsschienen 52 (Fig. 4) auf Rollen 54 in die einzelnen Lagerreihen 32 verfahren werden kann.

Der Quertransportwagen 24 ist über nicht dargestellte aufwickelbare Versorgungsleitungen, wie Stromkabel, Steuerkabel und dergleichen, beim Ein- und Ausfahren in die Lagerreihen 32 stets mit dem Längstransportwagen 22 verbunden. Die Breite jeder Lagerreihe 32 entspricht dabei der Breite des Quertransportwagens. Sie im Ausführungsbeispiel darüber hinaus so groß gewählt, dass die Lagerreihen 32 auch begehbar und mit Flurförderfahrzeugen befahrbar sind, um einen Notzugang sicherzustellen, falls die automatische Versorgung mit der Transporteinrichtung 20 ausfallen sollte.

In der Seitenansicht der Fig. 4, die die Palettenlageranlage der Fig. 2 aus der Richtung IV-IV darstellt, ist der Quertransportwagen 24 in einer ausgefahrenen Stellung unterhalb einer auszulagernden Palette 60 gezeigt. Beim Verfahren läuft der Quertransportwagen 24 dabei mit seinen Rollen 54 in entlang der Wände 34 der Lagerreihen 32 verlaufenden Führungsschienen 52.

Figur 5 zeigt beispielhaft verschiedene Varianten der Einlagerung von Lagergütern. Dabei stellt Fig. 5(a) die Palettenstapelung 60 von Lagergütern, Fig. 5(b) ein System 62 mit Schubfächern auf Palette und Fig. 5(c) ein Regalsystem 64 mit Regelböden oder Rosten auf Palette dar.

Wird ein Lagergut, beispielsweise Proviant, aus einem Lagerraum benötigt, wird die entsprechende Palette mit der Ladung Proviant von der Transporteinrichtung 20 in die Kommissionierungszone 14 gebracht und dort mit dem Quertransportwagen 24 in einen der Zugangsbereiche 16 gefahren. In dem Zugangsbereich 16 wird von Hand die benötigte Proviantmenge der Ladung auf der Transporteinrichtung entnommen und zur Verarbeitung gebracht. Anschließend wird der Quertransportwagen 24 mit der verbleibenden Ladung gewogen und das bekannte Gewicht des Quertransportwagens 24 vom Gesamtgewicht abgezogen. Das als Ergebnis erhaltene Gewicht der Restladung wird von der Steuer- und Überwachungseinheit 70 gespeichert. Dadurch kann die jeweilige Proviantmenge kontrolliert werden, um etwa neuen Proviant zu ordern, wenn die Proviantmenge eines bestimmten Nahrungsmittels zur Neige geht. Entsprechend werden auch die Zugänge an Lagergütern von der Steuer- und Überwachungseinheit 70 erfasst und gespeichert.

Im Ausführungsbeispiel kann jedes Lagergut unter Berücksichtigung der klimatischen Anforderungen an einem beliebigen Lagerplatz abgelegt werden, da die Steuer- und Überwachungseinheit 70 den Lagerplatz für jedes Lagergut speichert. So können beispielsweise Mineralwasser, Limonaden und Bier in einer Lagerreihe in einer Palette 64 übereinander gestapelt sein. Soll dann etwa Limonade abgeholt werden, wird der andere Teil der Ladung in einem freien Raum abgestellt und die Limonadenladung wird in die Kommissionierungszone gebracht, wo die gewünschte Menge entnommen wird. Anschließend wird die Restladung der Limonade zusammen mit den anderen Ladungsteilen wieder an den Lagerplatz gebracht.

Die Steuer- und Überwachungseinheit 70 überprüft auch teilverbrauchte Ladeeinheiten und staut Lagergüter, die aufgrund ihrer Beschaffenheit zusammengefasst werden können, soweit möglich zusammen. Dies kann automatisch geschehen oder die Steuer- und Überwachungseinheit 70 kann dem Bediener vorschlagen, welche teilverbrauchten Ladeeinheiten zusammengefasst werden können.

Die Steuer- und Überwachungseinheit 70 erfasst weiter die Haltbarkeitsdaten verderblicher Produkte, wie Milch oder Wurst. Bei Annäherung oder Überschreiten des Haltbarkeitsdatums wird dann eine Warnmeldung für den Lagerverwalter erzeugt.

Im Ausführungsbeispiel wird durch die Steuer- und Überwachungseinheit 70 auch die Zugriffshäufigkeit auf bestimmte Lagergüter erfasst und gespeichert. Die am häufigsten verwendeten Güter werden möglichst nahe an der Kommissionierungszone 14 gelagert, wodurch ein schneller Zugriff auf diese Güter sichergestellt wird. Selten gebrauchte Güter werden dagegen in abgelegeneren Lagerreihen gelagert.

Die Steuer- und Überwachungseinheit 70 übernimmt auch die Überwachung der Temperatur und gegebenenfalls der Gaszusammensetzung, der klimatisierten Lagerräume, beispielsweise des Sauerstoff- oder Kohlendioxidgehalts. Dazu sind in den Lagerräumen entsprechende mit der Steuer- und Überwachungseinheit 70 verbundene Messeinrichtungen vorgesehen.

Neben Kühlräumen mit verschiedenen Kühlzonen bis hin zu tiefkalten Kühlräumen sind auch Trockenfrachträume und Lagerräume mit Inertgas-Atmosphäre vorgesehen. Die Haltbarkeit von Früchten und Gemüse kann durch den Einsatz inerter Gase wesentlich erhöht werden. Die Klimatisierungseinrichtungen weisen dabei N₂- bzw. CO₂-Generatoren, gegebenenfalls auch eine O₂-Zufuhr zur Versorgung der Lagerräume auf.

Die Lagerreihen 32 können zum Lagergang 30 hin mittels Türen verschlossen sein. Im Bereich des Lagergangs wird durch seitliche Schiebetüren eine Schleuse ausgebildet. Die Transporteinrichtung 20 fährt in diese Schleuse ein und die Schiebetüren werden geschlossen, so dass gekühlte Luft aus der Lagerreihe nur in die Schleuse, aber nicht in den gesamten Lagergang 30 und in Lagerreihen mit anderen klimatischen Bedingungen gelangt.

Neben Proviant und anderen Lagergütern kann die Anlage auch Munition aufnehmen. Dazu werden die Trennwände und die Deckenverkleidung eines Lagerraums doppelwandig ausgebildet und mit Wasser befüllt. Die doppelwandigen, mit Wasser befüllten Trennwände können gegebenenfalls die Detonationsenergie aufnehmen.

Die Steuer- und Überwachungseinheit 70 ist im Ausführungsbeispiel durch einen Rechner mit entsprechender Software und Peripheriegeräten zur Steuerung der externen Geräte gebildet.

Während die Erfindung insbesondere mit Bezug auf bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Beispielsweise muss die Trag- und Laufführung des Längstransportwagens 22 nicht an der Raumdecke befestigt sein, sondern kann etwa auch am Raumboden angeordnet sein. Auch kann der Quertransportwagen 24 direkt auf dem Boden des Lagerraums verfahren werden. Es sind dann nur seitliche Leitschienen entlang der Lagerreihen 32 vorgesehen.

Dementsprechend soll die Offenbarung der vorliegenden Erfindung nicht einschränkend sein. Statt dessen soll die Offenbarung der vorliegenden Erfindung den Umfang der Erfindung veranschaulichen, der in den nachfolgenden Ansprüchen dargelegt ist.

### Bezugszeichenliste

- 10A-10K: Lagerräume
- 12: Trennwand
- 14: Kommissionierungszone
- 16: Zugangsbereich
- 20: Transporteinrichtung
- 22: Längstransportwagen
- 24: Quertransportwagen
- 26: Bewegungsrichtung Längstransportwagen
- 28: Bewegungsrichtung Quertransportwagen
- 30: Lagergang
- 32: Lagerreihe
- 34: Wand
- 36: Trennschott
- 38: Klimatisierungseinrichtung
- 40: Halterung
- 42: Schiene
- 44: Raumdecke
- 46: Transportplattform
- 48: Vertiefung
- 50: Raumboden
- 52: Führungsschiene
- 54: Rollen
- 56: rückwärtige Wand
- 60: Palettenstapelung
- 62: System mit Schubfächern
- 64: Regalsystem
- 70: Steuer- und Überwachungseinheit
- 100: Palettenlageranlage

## Patentansprüche

1. Palettenlageranlage zur Lagerhaltung von Lagergütern unter verschiedenen klimatischen Bedingungen, insbesondere für den Einsatz in einem Wasserfahrzeug, die beiderseits eines Lagergangs (30) angeordnete Lagerreihen (32), eine in dem Lagergang verfahrbare Transporteinrichtung (20) mit einem in dem Lagergang (30) verfahrbaren Längstransportwagen (22) und mit einem in die Lagerreihen (32) verfahrbaren Quertransportwagen (24) zum Ein- und Auslagem von Paletteneinheiten (60, 62, 64) in die Lagerreihen (32) und eine Steuer- und Überwachungseinheit (70) umfasst,
**dadurch gekennzeichnet,**
**dass**
a.) beiderseits des Lagergangs (30) Lagerreihen (32) angeordnet sind; die mehrere durch Trennwände (12) getrennte Lagerräume (10A-10K) bilden, in denen unterschiedliche klimatische Bedingungen einstellbar sind, wobei die klimatisierten Lagerräume (10A-10K) jeweils eine mit der Steuer- und Überwachungseinheit (70) zusammenwirkende Messeinrichtung aufweisen, die die Temperatur und/oder die Gaszusammensetzung der Atmosphäre erfasst,
b.) dass zumindest ein Teil der getrennten Lagerräume (10A-10K) jeweils eine Klimatisierungseinrichtung (38) aufweist, die eine vorbestimmte Temperatur und/oder eine vorbestimmte Atmosphäre, insbesondere mit vorbestimmtem Sauerstoff-, Kohlendioxid- oder Schutzgasgehalt, in dem Lagerraum (10A-10K) einstellt und
c.) dass die Steuer- und Überwachungseinheit (70) die Menge der im Kommissionierungsbereich (14) zugeführten oder entnommenen Lagergüter überwacht und die Einlagerung von Lagergütern in einen Lagerraum (10A-10K) mit dem jeweiligen Lagergut angepassten klimatischen Bedingungen steuert.

2. Palettenlageranlage nach Anspruch 1,
**dadurch gekennzeichnet,**
**dass** die klimatisierten Lagerräume (10A-10K) gegeneinander über atmosphärische Schleusen (36) im Lagergang (30) gesichert sind.

3. Palettenlageranlage nach Anspruch 1 und 2,
**dadurch gekennzeichnet,**
**dass** der Längstransportwagen (22) in an einer Raumdecke (44) des Lagers angebrachten Schienen (42) geführt ist.

4. Palettenlageranlage nach einem der Ansprüche 1 bis 3,
**dadurch gekennzeichnet,**
**dass** der Quertransportwagen (24) auf den Längstransportwagen (22) aufgesattelt ist und mittels entlang der Lagerreihen (32) angebrachten Führungsschienen (52) in die einzelnen Lagerreihen (32) verfahrbar ist.

5. Palettenlageranlage nach einem der Ansprüche 1 bis 4,
**dadurch gekennzeichnet,**
**dass** die Trennwände (12) der Lagerräume (10A-10K) aus Edelstahl oder aus aluminiumbeschichteten Paneelen bestehen.

6. Palettenlageranlage nach einem der Ansprüche 1 bis 5,
**dadurch gekennzeichnet,**
**dass** die Trennwände (12) die Lagerräume (10A-10K) wasserdicht, feuerfest und gasdicht voneinander abtrennen.

7. Palettenlageranlage nach einem der Ansprüche 1 bis 6,
**dadurch gekennzeichnet,**
**dass** zumindest ein Lagerraum (10A-10K) mit doppelwandigen und mit Wasser befüllbaren Trennwänden, bevorzugt zusätzlich mit einer doppelwandigen, mit Wasser befüllbaren Deckenverkleidung versehen ist.

8. Palettenlageranlage nach einem der Ansprüche 1 bis 7,
**dadurch gekennzeichnet,**
**dass** die Steuer- und Überwachungseinheit (70) die Zugriffshäufigkeit der Lagergüter erfasst und die Lagergüter mit einem ihrer Zugriffshäufigkeit entsprechenden Transportweg zum Kommissionierungsbereich (14) einlagert.

9. Palettenlageranlage nach einem der Ansprüche 1 bis 8,
**dadurch gekennzeichnet,**
**dass** die Steuer- und Überwachungseinheit (70) Haltbarkeitsdaten von Lagergütern erfasst und vor oder bei Erreichen des Verfallsdatums eine Wamanzeige für diese Lagergüter erzeugt.

10. Palettenlageranlage nach einem der Ansprüche 1 bis 9,
**dadurch gekennzeichnet,**
**dass** die Steuer- und Überwachungseinheit (70) die gelagerte Menge von Lagergütern überwacht und bei Unterschreiten einer vorbestimmten Mindestmenge eine Wamanzeige für diese Lagergüter erzeugt.

## Claims

1. Pallet storage plant for holding in storage goods to be stored under different climatic conditions, in particular for use in a watercraft, which comprises storage rows (32) arranged on both sides of a storage aisle (30), a transport device (20) travelling in the storage aisle with a longitudinal transfer car (22) travelling into the storage aisle (30) and with a transverse transfer car (24) travelling into the storage rows (32) for the storing in and out of pallet units (60, 62, 64) into the storage rows (32) and a control and supervising unit (70),
**characterized in**
**that**
a.) storage rows (32) which constitute several storage spaces (10A-K) separated by partition walls (12) are placed on both sides of the storage aisle, storage spaces in which different climatic conditions are adjustable, whereby the air conditioned storage spaces (10A-10K) have respectively a measuring device, cooperating with the control and supervising unit (70), which detects the temperature and/or the gas composition of the atmosphere,
b.) that at least one part of the separated storage spaces (10A-10K) has respectively one air-conditioning device (38) which adjusts a predetermined temperature and/or a predetermined atmosphere, in particular with a predetermined oxygen, carbon dioxide or protective gas content, in the storage space (10A-10K) and
c.) that the control and supervising unit (70) supervises the quantity of the goods to be stored supplied or removed in the commissioning space and controls the storing-in of goods to be stored into a storage space (10A-10K) with climatic conditions adapted to the respective goods to be stored.

2. Pallet storage plant according to claim 1,
**characterized in**
**that** the air-conditioned storage spaces (10A-10K) are protected against each other by atmospheric locks (36) in the storage aisle (30).

3. Pallet storage plant according to claim 1 and 2,
**characterized in**
**that** the longitudinal transfer car (22) is guided in rails (42) mounted on a space ceiling (44) of the store space.

4. Pallet storage plant according to any of the claims 1 to 3,
**characterized in**
**that** the transverse transfer car (24) is mounted onto the longitudinal transfer car (22) and is displaceable into the different storage rows (32) by means of guiding rails (52) fixed along the storage rows (32).

5. Pallet storage plant according to any of the claims 1 to 4,
**characterized in**
**that** the partition walls (12) of the storage spaces (10A-10K) are made of stainless steel or of aluminium coated panels.

6. Pallet storage plant according to any of the claims 1 to 5,
**characterized in**
**that** the partition walls (12) separate the storage spaces (10a-10K) from each other so as to be waterproof, fireproof and gasproof.

7. Pallet storage plant according to any of the claims 1 to 6,
**characterized in**
**that** at least one storage space (10A-10K) is provided with double-walled partition walls which can be filled with water, preferably additionally with a double-walled ceiling facing which can be filled with water.

8. Pallet storage plant according to any of the claims 1 to 7,
**characterized in**
**that** the control and supervising unit (70) detects the frequency of access of the goods to be stored and stores in the goods to be stored with a transport distance to the commissioning area (14) corresponding to their frequency of access.

9. Pallet storage plant according to any of the claims 1 to 8,
**characterized in**
**that** the control and supervising unit (70) detects storage stability dates of goods to be stored and produces a warning signal before the expiration date is reached or when it is reached.

10. Pallet storage plant according to any of the claims 1 to 9,
**characterized in**
**that** the control and supervising unit (70) supervises the stored quality of goods to be stored and produces a warning signal for these goods to be stored when a predetermined minimal quantity is not reached.

## Revendications

1. Installation de stockage de palettes pour l'entreposage de marchandises à stocker dans différentes conditions climatiques, en particulier pour l'utilisation dans un navire, qui comprend des des rangées de stockage (32) placées des deux côtés d'une allée de stockage (30), un dispositif de transport (20) déplaçable dans l'allée de stockage avec un chariot de transport longitudinal (22) déplaçable dans l'allée de stockage (30) et avec un chariot de transport transversal (24) déplaçable dans les rangées de stockage (32) pour l'emmagasinage et l'enlèvement d'unités de palettes (60, 62, 64) dans les rangées de stockage (32) et une unité de commande et de surveillance (70),
**caractérisée en ce**
**que**
a.) des rangées de stockage (32), qui forment plusieurs espaces de stockage (10A-10K) séparés par des cloisons (12), sont placées des deux côtés de l'allée de stockage (30), espaces de stockage dans lesquels différentes conditions climatiques sont réglables, les espaces de stockage climatisés (10A-10K) présentant respectivement un dispositif de mesure, coopérant avec l'unité de commande et de surveillance (70), qui détecte la température et/ou la composition des gaz de l'atmosphère,
b.) qu'au moins une partie des espaces de stockage séparés (10A-10K) présente respectivement un dispositif de climatisation (38) qui règle une température prédéfinie et/ou une atmosphère prédéfinie, en particulier avec un taux d'oxygène, de gaz carbonique ou de gaz protecteur prédéfini, dans l'espace de stockage (10A-10K) et
c.) que l'unité de commande et de surveillance (70) surveille la quantité des marchandises à stocker amenées ou enlevées dans la zone de préparation des commandes (14) et commande l'emmagasinage des marchandises à stocker dans un espace de stockage (10A-10K) avec des conditions climatiques adaptées aux marchandises devant être respectivement stockées.

2. Installation de stockage de palettes selon la revendication 1,
**caractérisée en ce**
**que** les espaces de stockage climatisés (10A-10K) sont protégés les uns des autres par des sas atmosphériques (36) dans l'allée de stockage (30).

3. Installation de stockage de palettes selon la revendication 1 et 2,
**caractérisée en ce**
**que** le chariot de transport longitudinal (22) est guidé dans des rails (42) fixés à un plafond d'espace (44) de l'entrepôt.

4. Installation de stockage de palettes selon l'une des revendications 1 à 3,
**caractérisée en ce**
**que** le chariot de transport transversal (24) est attelé sur le chariot de transport longitudinal (22) et est déplaçable dans les différentes rangées de stockage (32) au moyen de rails de guidage (52) fixés le long des rangées de stockage (32).

5. Installation de stockage de palettes selon l'une des revendications 1 à 4,
**caractérisée en ce**
**que** les cloisons (12) des espaces de stockage (10A-10K) sont constituées en acier inoxydable ou par des panneaux revêtus d'aluminium.

6. Installation de stockage selon l'une des revendications 1 à 5,
**caractérisée en ce**
**que** les cloisons (12) séparent les espaces de stockage (10A-10K) les uns des autres en les rendant étanches à l'eau, résistants au feu et étanches au gaz.

7. Installation de stockage de palettes selon l'une des revendications 1 à 6,
**caractérisée en ce**
**qu'**au moins un espace de stockage (10A-10K) est pourvu de cloisons à double paroi et pouvant être remplies d'eau, de préférence en plus avec un revêtement de plafond à double paroi, pouvant être rempli d'eau.

8. Installation de stockage de palettes selon l'une des revendications 1 à 7,
**caractérisée en ce**
**que** l'unité de commande et de surveillance (70) détecte la fréquence d'accès des marchandises à stocker et emmagasine les marchandises à stocker avec un parcours de transport vers la zone de préparation des commandes (14) correspondant à la fréquence d'accès.

9. Installation de stockage de palettes selon l'une des revendications 1 à 8,
**caractérisée en ce**
**que** l'unité de commande et de surveillance (70) saisit des dates limites de conservation des marchandises à stocker et génère un signal d'alarme pour ces marchandises à stocker avant d'atteindre la date d'échéance ou lorsque celle-ci est atteinte.

10. Installation de stockage de palettes selon l'une des revendications 1 à 9,
**caractérisée en ce**
**que** l'unité de commande et de surveillance (70) surveille la quantité stockée de marchandises à stocker et génère un signal d'alarme pour ces marchandises à stocker lorsqu'une quantité minimale prédéfinie n'est pas atteinte.
